(19) Europäisches Patentamt
European Patent Office
Office européen des brevets

(11) **EP 3 276 576 B1**

(12) **EUROPEAN PATENT SPECIFICATION**

(45) Date of publication and mention of the grant of the patent:
**26.06.2019 Bulletin 2019/26**

(51) Int Cl.:
***G06T 7/593*** *(2017.01)*

(21) Application number: **17182204.2**

(22) Date of filing: **19.07.2017**

(54) **DISPARITY ESTIMATION BY FUSION OF RANGE DATA AND STEREO DATA**

DISPARITÄTSSCHÄTZUNG DURCH FUSION VON TIEFENDATEN UND STEREODATEN

ESTIMATION DE DISPARITÉ PAR FUSION DE DONNÉES DE DISTANCE ET DONNÉES STEREO

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.07.2016 JP 2016145170**

(43) Date of publication of application:
**31.01.2018 Bulletin 2018/05**

(73) Proprietor: **Ricoh Company, Ltd.**
**Tokyo 143-8555 (JP)**

(72) Inventors:
• **YOKOTA, Soichiro**
**Ohta-ku, Tokyo 143-8555 (JP)**
• **KAJIWARA, Yasuhiro**
**Ohta-ku, Tokyo 143-8555 (JP)**
• **SAISHO, Kenichiroh**
**Ohta-ku, Tokyo 143-8555 (JP)**
• **IMAI, Shigeaki**
**Ohta-ku, Tokyo 143-8555 (JP)**
• **NAKAMURA, Tadashi**
**Ohta-ku, Tokyo 143-8555 (JP)**

(74) Representative: **White, Duncan Rohan**
**Marks & Clerk LLP**
**Fletcher House (2nd Floor)**
**Heatley Road**
**The Oxford Science Park**
**Oxford OX4 4GE (GB)**

(56) References cited:
• **JAN FISCHER ET AL: "Combination of Time-of-Flight depth and stereo using semiglobal optimization", ROBOTICS AND AUTOMATION (ICRA), 2011 IEEE INTERNATIONAL CONFERENCE ON, IEEE, 9 May 2011 (2011-05-09), pages 3548-3553, XP032033860, DOI: 10.1109/ICRA.2011.5979999 ISBN: 978-1-61284-386-5**
• **NAIR RAHUL ET AL: "A Survey on Time-of-Flight Stereo Fusion", 2013, NETWORK AND PARALLEL COMPUTING; [LECTURE NOTES IN COMPUTER SCIENCE; LECT.NOTES COMPUTER], SPRINGER INTERNATIONAL PUBLISHING, CHAM, PAGE(S) 105 - 127, XP047269358, ISSN: 0302-9743 ISBN: 978-3-642-24392-9 * the whole document ***

## Description

Embodiments of the present disclosure relate to a disparity computation system, a mobile object, a disparity computation device, a disparity computation method, and carrier means.

Background Art

Conventionally, various kinds of mobile objects such as a vehicle are provided with a stereo camera which serves as one of the sensor devices (three-dimensional sensors) that capture the ambient environment as three-dimensional data. Such a stereo camera searches for the corresponding pixels in a comparison image that correspond to the pixels of a reference image, and computes a disparity. By so doing, the distance to an object is calculated and obtained.

It is advantageous for the stereo camera to have high spatial resolution compared with other kinds of three-dimensional sensors (such as millimeter-wave radar device and a light detection and ranging (LiDAR) device).

However, if, for example, an object with a little texture is included in the area of a reference image, the stereo camera cannot extract a corresponding pixel area with precision when the corresponding area in a comparison image is searched for. As a result, effective disparity computation cannot be performed.

JAN FISCHER ET AL: "Combination of Time-of-Flight depth and stereo using semiglobal optimization", ROBOTICS AND AUTOMATION (ICRA), 2011 IEE INTERNATIONAL CONFERENCE ON, IEE, 9 May 2011, pages 3548-3553 discloses a method for sensor combination on a stereo and a Time-of-flight camera system.

SUMMARY

The invention is defined by the appended claims. There is provided a disparity computation system in accordance with claim 1, a processor-implemented method of computing a disparity in accordance with claim 8, and a carrier means carrying computer readable code for controlling a computer system to carry of out the method in accordance with claim 10. According to one aspect of the present disclosure, the accuracy of the disparity computation improves.

BRIEF DESCRIPTION OF THE DRAWINGS

A more complete appreciation of exemplary embodiments and the many attendant advantages thereof will be readily obtained as the same becomes better understood by reference to the following detailed description when considered in connection with the accompanying drawings.

FIG. 1 is a diagram illustrating an external view and example installation of a disparity computation system, according to an embodiment of the present disclosure.

FIG. 2 is a diagram illustrating a hardware configuration of a disparity computation system, according to an embodiment of the present disclosure.

FIG. 3A and FIG. 3B are diagrams illustrating a pixel area in a comparison image and a reference-pixel area in a reference image, respectively, according to an embodiment of the present disclosure.

FIG. 4A and FIG. 4B are diagrams each illustrating the properties and characteristics of distance data obtained by a stereo camera unit, according to an embodiment of the present disclosure.

FIG. 5A and FIG. 5B are diagrams each illustrating the properties and characteristics of distance data obtained by a LiDAR range finder, according to an embodiment of the present disclosure.

FIG. 6 is a diagram illustrating a functional configuration of a rangefinder processing unit, according to an embodiment of the present disclosure.

Fig. 7 is a diagram illustrating a detailed functional configuration of a cost calculator, according to an embodiment of the present disclosure.

FIG. 8A and FIG. 8B are diagrams illustrating a method of calculating a cost C (p, d), according to an embodiment of the present disclosure.

FIG. 9 is a diagram illustrating a detailed functional configuration of a synthesis-cost calculator, according to an embodiment of the present disclosure.

FIG. 10 is a diagram illustrating r-directions referred to in the calculation of a route cost $L_r$ (p, d), according to an embodiment of the present disclosure.

FIG. 11 is a diagram illustrating a result of calculating a synthesis cost S in a reference-pixel area p, according to an embodiment of the present disclosure.

FIG. 12 is a flowchart of disparity image generating processes by a disparity image generator, according to an embodiment of the present disclosure.

The accompanying drawings are intended to depict exemplary embodiments of the present disclosure and should not be interpreted to limit the scope thereof. The accompanying drawings are not to be considered as drawn to scale unless explicitly noted.

DETAILED DESCRIPTION

The following description is for the purpose of describing particular embodiments only and is not intended to be limiting of the present disclosure.

In the following description, illustrative embodiments will be described with reference to acts and symbolic representations of operations (e.g., in the form of flowcharts) that may be implemented as program modules or functional processes including routines, programs, objects, components, data structures, etc., that perform particular tasks or implement particular abstract data types and may be implemented using existing hardware at existing network elements or control nodes. Such existing hardware may include one or more central processing units (CPUs), digital signal processors (DSPs), application-specific-integrated-circuits (ASICs), field programmable gate arrays (FPGAs), computers or the like. These terms in general may be collectively referred to as processors.

Unless specifically stated otherwise, or as is apparent from the discussion, terms such as "processing" or "computing" or "calculating" or "determining" or "displaying" or the like, refer to the action and processes of a computer system, or similar electronic computing device, that manipulates and transforms data represented as physical, electronic quantities within the computer system's registers and memories into other data similarly represented as physical quantities within the computer system memories or registers or other such information storage, transmission or display devices.

Embodiments of the present disclosure are described in detail with reference to the accompanying drawings. Note that in the description and the drawings of the embodiments of the present disclosure, like reference signs are given to elements with substantially the same functional configuration. Accordingly, overlapping descriptions are omitted where appropriate.

<Example Embodiment>

<1. External View and Example Installation of Disparity Computation System>

Firstly, an external view and example installation of a disparity computation system according to an embodiment of the present disclosure is described.

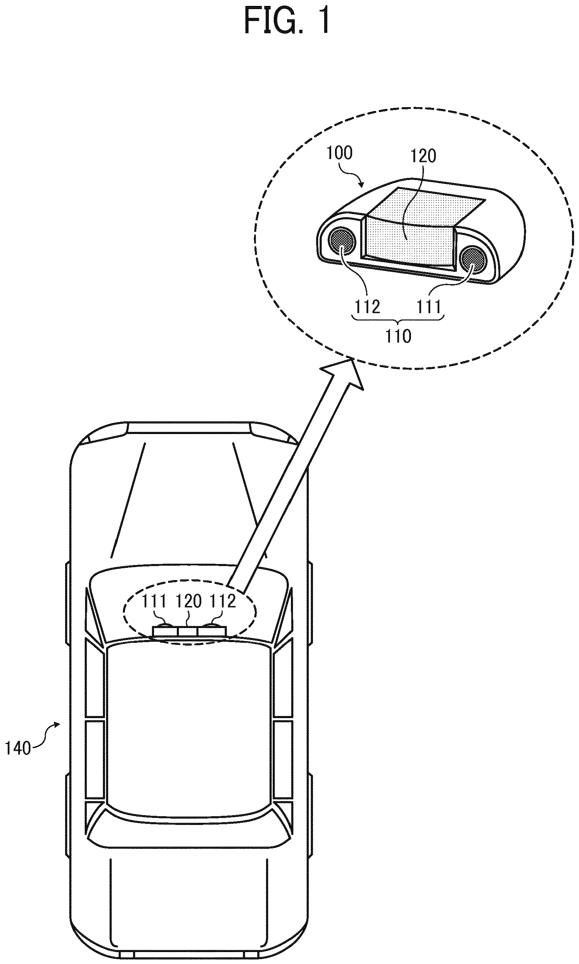

FIG. 1 is a diagram illustrating an external view and example installation of a disparity computation system 100 according to the present embodiment.

As illustrated in the upper part of FIG. 1 (external view), the disparity computation system 100 is provided with a stereo camera unit 110 and a light detection and ranging (LiDAR) range finder (LiDAR device) 120, which together serve as a sensor device (three-dimensional sensor) that captures the ambient environment as three-dimensional data. The stereo camera unit 110 includes a monocular camera unit 111 (first image sensing device) and a monocular camera unit 112 (second image sensing device), and the LiDAR range finder 120 is disposed between the monocular camera unit 111 and the monocular camera unit 112.

The monocular camera units 111 and 112 generate a captured image as each of the monocular camera units 111 and 112 captures an image in synchronization with each other in a predetermined frame cycle.

The LiDAR range finder 120 emits a laser beam and receives the reflected laser beam to measure the distance to the point irradiated with the laser beam (i.e., the distance to an object).

As illustrated on the lower side of FIG. 1 (an example of installation), the disparity computation system 100 is attached, for example, to the inner surface of the windshield of the vehicle 140 at the center. In this configuration, the stereo camera unit 110 and the LiDAR range finder 120 are both attached to the vehicle 140 in a forward-facing manner. In other words, in the vehicle 140 is installed with the disparity computation system 100 such that the direction in which the stereo camera unit 110 captures an image becomes same as the direction in which the LiDAR range finder 120 emits a laser beam.

<2. Hardware Configuration of Disparity Computation System>

Next, the hardware configuration of the disparity computation system 100 is described.

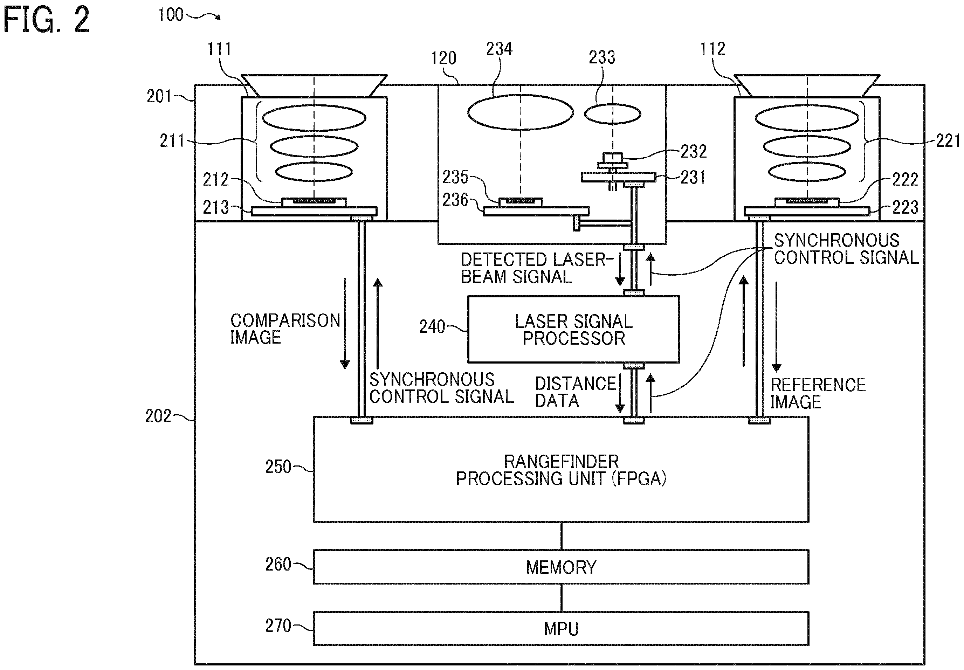

FIG. 2 is a diagram illustrating of a hardware configuration of the disparity computation system 100 according to the present embodiment.

As illustrated in FIG. 2, the disparity computation system 100 is provided with a camera stay 201 and a control board housing 202.

On the camera stay 201, the monocular camera units 111 and 112 and the LiDAR range finder 120 are integrally mounted. Due to this configuration, the disparity computation system 100 can be downsized and produced at low cost.

In the control board housing 202, a laser signal processor 240, a rangefinder processing unit 250, a memory 260, and a microprocessing unit (MPU) 270 are accommodated. As the laser signal processor 240 is independently arranged from the LiDAR range finder 120, the size of the LiDAR range finder 120 can be reduced. Due to this configuration, in the present embodiment, the LiDAR range finder 120 can be disposed between the monocular camera unit 111 and the monocular camera unit 112.

In the example illustrated in FIG. 2, the laser signal processor 240 and the rangefinder processing unit 250 are configured as separate circuit boards. However, the laser signal processor 240 and the rangefinder processing unit 250 may be configured as a circuit board in common. By so doing, the number of circuit boards is reduced, and the production cost can be reduced.

Next, the elements on the camera stay 201 side are described in detail. As illustrated in FIG. 2, the monocular camera unit 111 is provided with a plurality of camera lenses 211, an image sensing device 212, and a sensor substrate 213. The extraneous light that has passed through the camera lenses 211 is received by the image sensing device 212, and is photoelectrically converted in a predetermined frame cycle. The signals that are obtained as a result of the above photoelectric conversion are processed by the sensor substrate 213, and a captured image is generated for each frame. The generated captured image is sequentially sent to the rangefinder processing unit 250 as a comparison image.

The monocular camera unit 112 has the same configuration as that of the monocular camera unit 111, and a captured image that is generated based on a synchronous control signal in synchronization with the monocular camera unit 111 is sequentially sent to the rangefinder processing unit 250 as a reference image.

The LiDAR range finder 120 is provided with a light source driver 231, a laser beam source 232, and a projector lens 233. The light source driver 231 operates according to a synchronous control signal sent from the laser signal processor 240, and applies modulating electric current (light-source driving signal) to the laser beam source 232. Due to this configuration, the laser beam source 232 emits laser beams. The laser beams that are emitted from the laser beam source 232 are emitted to the outside through the projector lens 233.

In the present embodiment, an infrared semiconductor laser diode (LD) is used as the laser beam source 232, and near-infrared light with wavelengths of 800 nanometer (nm) to 950 nm is emitted as a laser beam. Moreover, the laser beam source 232 periodically emits a laser beam having a pulsed waveform according to the modulating electric current (light-source driving signal) applied by the light source driver 231. Further, the laser beam source 232 periodically emits a pulsed laser beam having a short pulse width of about a few nanoseconds to several hundreds of nanoseconds.

The pulsed laser beam that is emitted from the laser beam source 232 is emitted to the outside through the projector lens 233 as a projector beam, and then emitted to a predetermined irradiation point (i.e., a predetermined object). Note also that the laser beams that are emitted from the laser beam source 232 are approximately collimated by the projector lens 233. Due to this configuration, the irradiation area of the object is controlled to a predetermined minute area.

The LiDAR range finder 120 further includes a photoreceptor lens 234, a photoreceptor 235, and a light-signal amplifier circuit 236. The laser beam that is emitted to a predetermined object uniformly disperses to all directions. Then, only the light components that are reflected and return in the same optical path as the laser beams that were emitted from the LiDAR range finder 120 are guided to the photoreceptor 235 through the photoreceptor lens 234 as reflected light.

In the present embodiment, a silicon pin photodiode or an avalanche photodiode is used as the photoreceptor 235. The photoreceptor 235 photoelectrically converts the reflected light to generate a detected laser-beam signal, and the light-signal amplifier circuit 236 amplifies the generated detected laser-beam signal and then sends the amplified detected laser-beam signal to the laser signal processor 240.

Next, the elements on the control board housing 202 side are described in detail. The laser signal processor 240 calculates and obtains the distance to a predetermined object based on the detected laser-beam signal sent from the LiDAR range finder 120, and sends the calculated and obtained distance data to the rangefinder processing unit 250.

The rangefinder processing unit 250 is configured by, for example, a dedicated integrated circuit such as a field programmable gate array (FPGA) and an application specific integrated circuit (ASIC). The rangefinder processing unit 250 outputs a synchronous control signal for controlling the timing of capturing an image and the timing of laser-beam projection and laser-beam reception to the monocular camera units 111 and 112 and the laser signal processor 240.

Moreover, the rangefinder processing unit 250 generates a disparity image based on a comparison image sent from the monocular camera unit 111, a reference image sent from the monocular camera unit 112, and distance data sent from the laser signal processor 240. Then, the rangefinder processing unit 250 stores the generated disparity image in the memory 260.

In the memory 260, a disparity image that is generated by the rangefinder processing unit 250 is stored. Moreover, the memory 260 serves as a work area where the rangefinder processing unit 250 and the MPU 270 performs various kinds of processes.

The MPU 270 controls the elements accommodated in the control board housing 202, and analyzes a disparity image stored in the memory 260.

<3. Reference-pixel Area in Reference Image and Pixel Area in Comparison Image>

Next, a reference-pixel area that is the to-be-processed pixel area of a reference image and a pixel area of a comparison image are described.

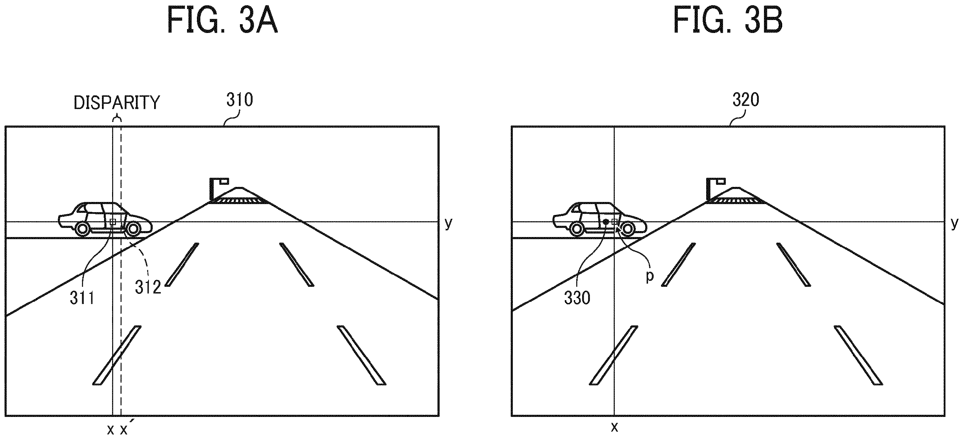

FIG. 3A and FIG. 3B are diagrams illustrating a pixel area in a comparison image and a reference-pixel area in a reference image, respectively, according to the present embodiment. Among these drawings, FIG. 3B illustrates a reference image 320 sent from the monocular camera unit 112, according to the present embodiment. In the reference image 320, a pixel area p indicates a reference-pixel area that is currently to be processed by the rangefinder processing unit 250. In the example of FIG. 3B, a reference-pixel area p indicates the pixel area at a position specified by coordinates (x, y).

On the other hand, FIG. 3A illustrates a comparison image 310 sent from the monocular camera unit 111, according to the present embodiment. In the comparison image 310, a pixel area 311 indicates the pixel area in the comparison image 310 having the same x-coordinate and y-coordinate as those of the reference-pixel area p in the reference image 320.

A position 312 indicates the position of a corresponding pixel area that corresponds to the reference-pixel area p in the reference image 320. An object in the real space that lies at the position of the reference-pixel area p (i.e., a portion of the side of another vehicle in the examples of FIG. 3A and FIG. 3B) and an object in the real space that lies at the position 312 of the corresponding pixel area indicate the same position in the real space. However, the position from which the reference image 320 is captured is offset from the position from which the comparison image 310 is captured in the right and left directions. Due to this configuration, the coordinates of the position 312 are offset from the coordinates of the pixel area 311 by the amount of disparity in the right and left directions.

Note that as illustrated in FIG. 3A and FIG. 3B, when the reference-pixel area p is included in an area with a little texture (an area where there are little changes in pixel value among neighboring pixel areas) such as the side of another vehicle, in actuality, it is difficult to precisely extract the position 312 of the corresponding pixel area that corresponds to the reference-pixel area p. For example, even if a search is performed in a prescribed range of the comparison image 310 with reference to the pixel area 311 being the starting point, there is a greater likelihood that an irrelevant pixel area is detected in error and the position 312 of the corresponding pixel area that corresponds to the reference-pixel area p cannot precisely be extracted.

In order to deal with such a situation, the disparity computation system 100 according to the present embodiment uses the distance data measured by the LiDAR range finder 120 to perform disparity computation. In FIG. 3B, a dot 330 schematically indicates the point irradiated with the laser beam by the LiDAR range finder 120 at the timing when the reference image 320 is captured, in an overlapping manner on the reference image 320.

As illustrated in FIG. 3B, the dot 330 is also positioned within the side of another vehicle, and is at an approximately same position as the reference-pixel area p. In other words, the distance to an object (i.e., a portion of the side of another vehicle) in the real space that lies at the position of the reference-pixel area p can be calculated using the detected laser-beam signal, which is generated from the laser beam reflected from the irradiation point of the dot 330.

In view of the above circumstances, when disparity computation is to be performed in relation to the reference-pixel area p, the rangefinder processing unit 250 according to the present embodiment makes use of the distance to the dot 330 that has been calculated using a detected laser-beam signal.

<4. Range Resolution and Spatial Resolution of Three-dimensional Sensors>

Here, the range resolution and the spatial resolution of each three-dimensional sensor is briefly described based on the properties and characteristics of distance data of the three-dimensional sensors (including the stereo camera unit 110 and the LiDAR range finder 120) provided for the disparity computation system 100.

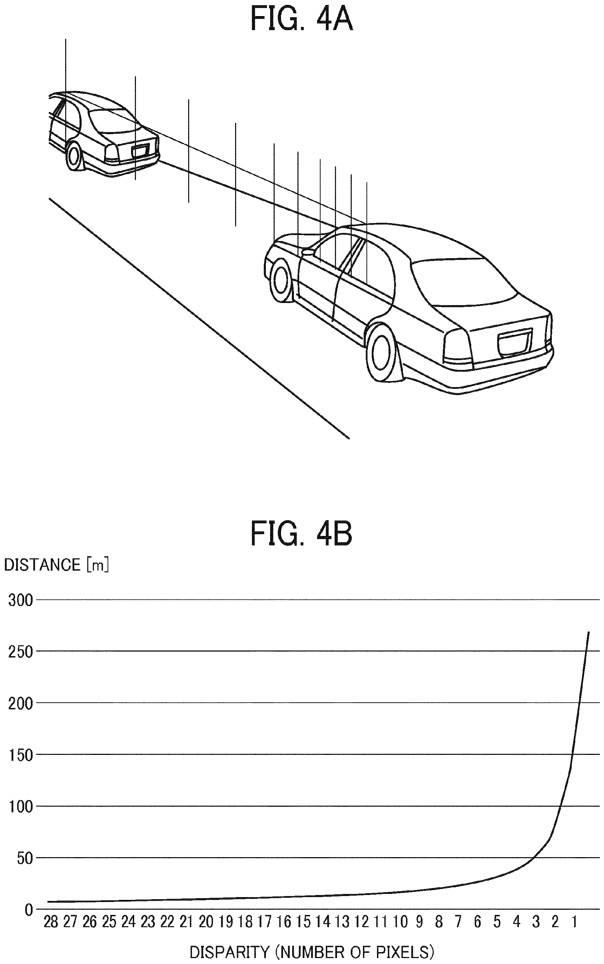

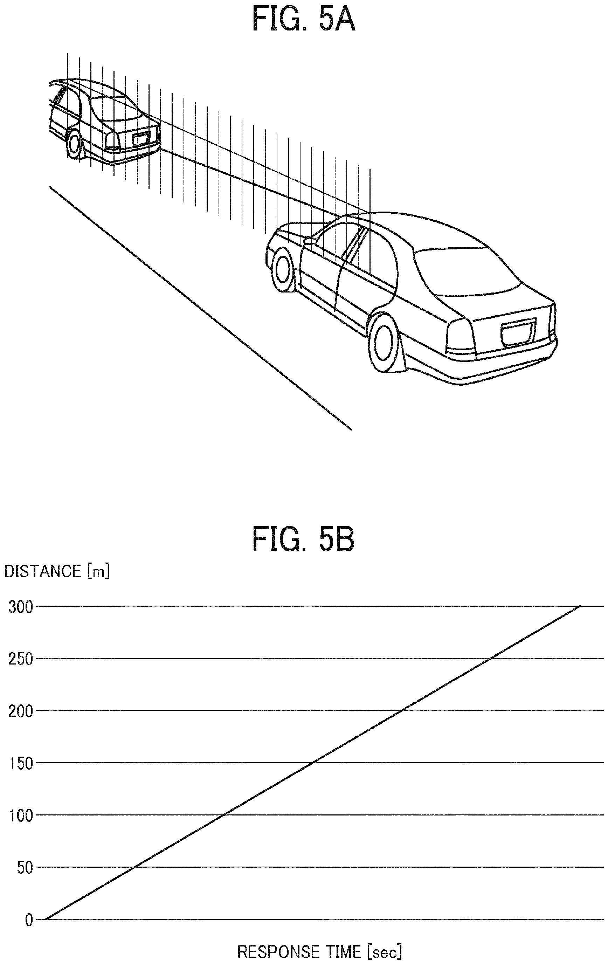

FIG. 4A and FIG. 4B and FIG. 5A and FIG. 5B are diagrams each illustrating the properties and characteristics of distance data obtained by a three-dimensional sensor, according to the present embodiment.

Among these drawings, FIG. 4A and FIG. 4B are diagrams each illustrating the properties and characteristics of distance data obtained by the stereo camera unit 110, according to the present embodiment. As illustrated in FIG. 4A, the distance data that is calculated and obtained by the stereo camera unit 110 has a higher range resolution as the distance to the stereo camera unit 110 is shorter, and has a lower range resolution as the distance to the stereo camera unit 110 is longer.

In this configuration, the range resolution of the distance data that is calculated and obtained by the stereo camera unit 110 is not proportionate to the distance to an object, but as illustrated in the graph of FIG. 4B, rapidly deteriorates when the distance to an object becomes equal to or longer than a certain length (for example, 25 meters (m)). Note also that in FIG. 4B, the horizontal axis indicates the disparity which is indicated by the number of pixels, and the vertical axis indicates the distance to an object. In the graph of FIG. 4B, the range resolution increases towards the bottom left of the graph, and the range resolution decreases towards the top right of the graph.

In other words, the distance data that is calculated and obtained by the stereo camera unit 110 has a sufficiently high range resolution when the distance is equal to or shorter than a certain length. As the stereo camera unit 110 has a higher spatial resolution as the range resolution increases, the distance data that is calculated and obtained by the stereo camera unit 110 also has a sufficiently high spatial resolution when the distance is equal to or shorter than a certain length. However, as described above, in the case of the stereo camera unit 110, regardless of the level of the range resolution or spatial resolution, disparity computation cannot effectively be performed for an area that includes an object with a little texture.

By contrast, FIG. 5A and FIG. 5B are diagrams each illustrating the properties and characteristics of distance data obtained by the LiDAR range finder 120, according to the present embodiment.

As illustrated in FIG. 5A, the distance data that is obtained by the LiDAR range finder 120 has a constant range resolution regardless of the distance to the LiDAR range finder 120. Accordingly, as illustrated in the graph of FIG. 5B, the response time since a laser beam is emitted and until the reflected laser beam is received is proportionate to the distance to an object, and the inclination in the graph is substantially constant. In FIG. 5B, the horizontal axis indicates the response time since a laser beam is emitted and until the reflected laser beam is received, and the vertical axis indicates the distance to an object. In the graph of FIG. 5B, the range resolution increases as the inclination in the graph is smaller, and the range resolution decreases as the inclination in the graph is larger.

In the case of the LiDAR range finder 120, the response time can be measured in nanoseconds. Due to this configuration, the distance data that is obtained by the LiDAR range finder 120 regardless of to the distance to an object has a higher range resolution than the stereo camera unit 110 in almost any distance. Moreover, in the case of the LiDAR range finder 120, the range resolution is at a constant level regardless of whether the object to be measured is an object with a little texture.

However, in the case of the LiDAR range finder 120, laser beams are emitted in synchronization with the capturing of the stereo camera unit 110. Due to this configuration, the number of times laser beams can be emitted is limited. For this reason, high spatial resolution cannot be achieved in the distance data that is obtained by the LiDAR range finder 120.

In view of the above properties and characteristics of the three-dimensional sensors provided for the disparity computation system 100, for example, the distance data that is obtained by the LiDAR range finder 120 may be used in a selective manner for an area where disparity computation cannot effectively performed by the stereo camera unit 110.

However, in such a configuration, the spatial resolution of the relevant area significantly deteriorates compared with the spatial resolution of other areas where disparity computation can effectively performed. This is because, whereas distance data is calculated and obtained on a pixel-by-pixel basis in other areas, distance data is calculated and obtained only for the points irradiated with laser beams in the relevant area.

In view of the above circumstances, the disparity computation system 100 according to the present embodiment the distance data that is calculated and obtained by the laser signal processor 240 is used for disparity computation in order to achieve a high spatial resolution in any area including areas with distance equal to or shorter than a certain length. As described above, by integrating distance data with a high degree of precision into disparity computation, the position 312 of the corresponding pixel area can accurately be extracted and disparity computation can precisely be performed even in areas where it used to be difficult to perform effective disparity computation.

<5. Functional Configuration of Rangefinder Processing Unit>

(1) Functional Configuration of Rangefinder Processing Unit

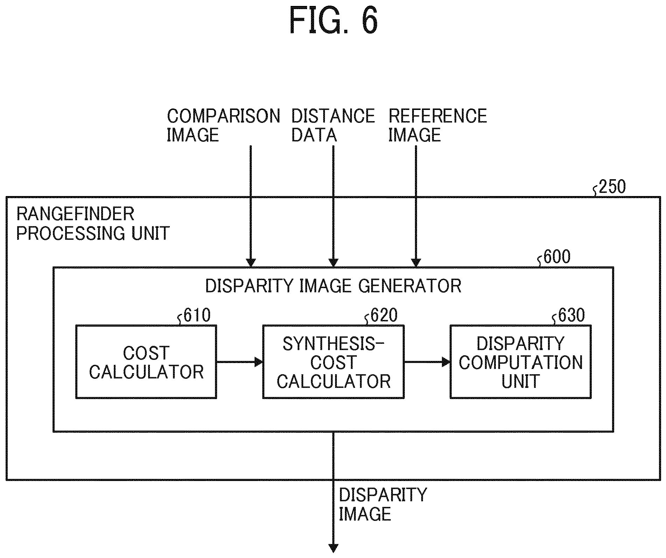

FIG. 6 is a diagram illustrating a functional configuration of the rangefinder processing unit 250, according to the present embodiment. Note that FIG. 6 does not illustrate the entire functional configuration of the rangefinder processing unit 250, but illustrates only the functional configuration of the processes related to disparity computation. The other functional configuration (for example, a function of transmitting a synchronous control signal) is omitted in FIG. 6.

As illustrated in FIG. 6, the rangefinder processing unit 250 includes a disparity image generator 600 as a functional configuration for the processes related to disparity computation. The disparity image generator 600 further includes a cost calculator 610, a synthesis-cost calculator 620, and a disparity computation unit 630.

The cost calculator 610 is an example of a calculation unit, and the cost calculator 610 obtains the reference image 320 from the monocular camera unit 112 and obtains the comparison image 310 from the monocular camera unit 111. Moreover, the cost calculator 610 extracts the reference-pixel area p from the reference image 320, and calculates a cost C with reference to a plurality of pixel areas in the comparison image 310. The cost C is a parameter that indicates the degree of dissimilarity between the reference-pixel area p and a plurality of pixel areas in the comparison image 310.

Further, the cost calculator 610 obtains the distance data of the dot 330 from the laser signal processor 240, and calculates and obtains a cost $C_1$. The cost $C_1$ is a parameter that indicates the degree of dissimilarity between the reference-pixel area p and the pixel area that is at the position derived from the obtained distance data in the comparison image 310.

Then, the cost calculator 610 adds up the weighting based on the calculated cost C (first cost) and cost $C_1$ (second cost) to calculate and obtain weighted costs for a plurality of pixel areas in the comparison image 310. Further, the cost calculator 610 notifies the synthesis-cost calculator 620 of the obtained weighted costs. In other words, each weighted cost indicates a cost (degree of dissimilarity) combined by the synthesis-cost calculator 620.

The synthesis-cost calculator 620 combines the weighted costs of a plurality of pixel areas provided by the cost calculator 610 to calculate a synthesis cost S (p, d) and obtain a result of the combining processes. The synthesis-cost calculator 620 adopts, for example, a processing method such as semi-global matching (SGM) to calculate and obtain a plurality of route costs $L_r$, and gathers each one of the route costs $L_r$ to the reference-pixel area p. By performing these processes as described above, a synthesis cost S (p, d) is calculated and obtained.

The disparity computation unit 630 is an example of a computation unit, and extracts the corresponding pixel area in the comparison image 310 that corresponds to the reference-pixel area p based on the synthesis cost S calculated by the synthesis-cost calculator 620, and computes a disparity of the reference-pixel area p.

Note that the cost calculator 610 and the synthesis-cost calculator 620 perform similar processes for other reference-pixel areas in the reference image 320. Then, the disparity computation unit 630 computes a disparity for each one of the reference-pixel areas. Moreover, the disparity computation unit 630 generates a disparity image based on the computed disparities for a plurality of reference-pixel areas, and stores the generated disparity image in the memory 260.

(2) Functional Configuration of Cost Calculator 610

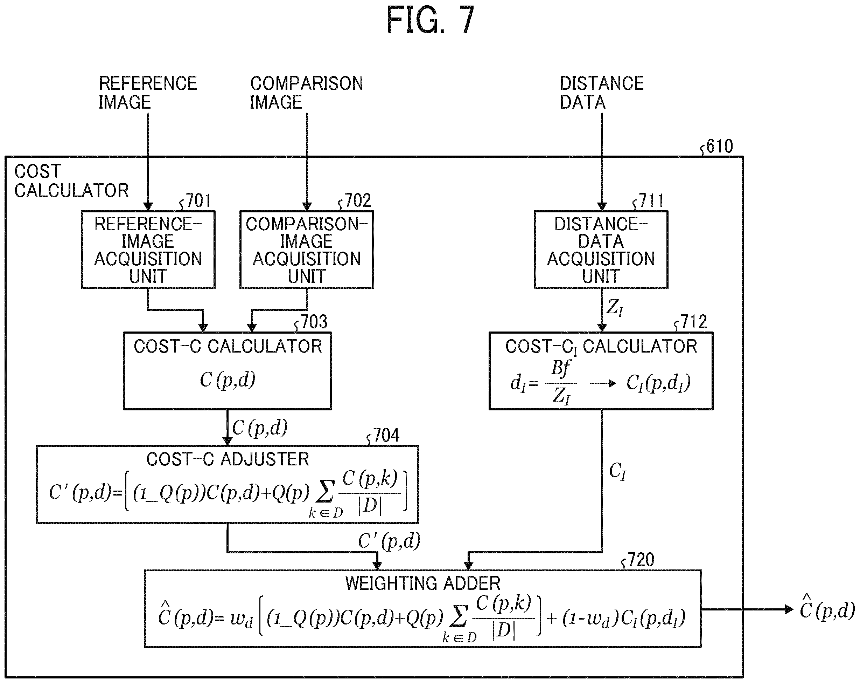

FIG. 7 is a diagram illustrating a detailed functional configuration of the cost calculator 610, according to the present embodiment.

As illustrated in FIG. 7, the cost calculator 610 includes a reference-image acquisition unit 701, a comparison-image acquisition unit 702, a cost-C calculator 703, and a cost-C adjuster 704. Moreover, the cost calculator 610 includes a distance-data acquisition unit 711, a cost-Ci calculator 712, and a weighting adder 720.

The reference-image acquisition unit 701 obtains the reference image 320 from the monocular camera unit 112, and extracts the reference-pixel area p from the obtained reference image 320. The comparison-image acquisition unit 702 obtains the comparison image 310 from the monocular camera unit 111.

The cost-C calculator 703 calculates the cost C (p, d) of the reference-pixel area p.

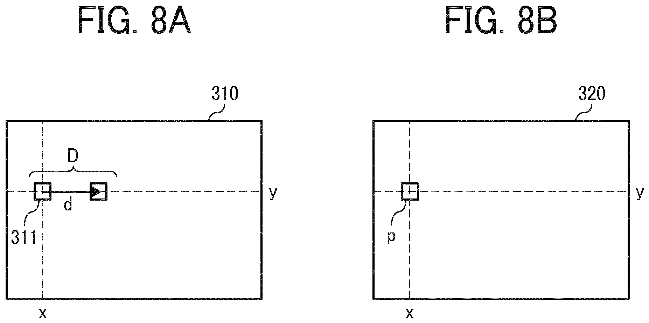

FIG. 8A and FIG. 8B are diagrams illustrating a method of calculating the cost C (p, d), according to the present embodiment.

As illustrated in FIG. 8A, the cost-C calculator 703 varies the amount of shift d within a predetermined range (0 to D) to shift the pixel area 311 in sequence within the comparison image 310. Then, the cost-C calculator 703 calculates and obtains a cost C (p, d) as a degree of dissimilarity between the pixel value of the pixel area 311 at each one of the positions of the amounts of shift d, and the pixel value of the reference-pixel area p in the reference image 320 illustrated in FIG. 8B.

Note that the cost C (p, d) is calculated using a known matching method such as the sum of absolute difference (SAD) and the sum of squared difference (SSD) in which a cost is calculated based on the difference in pixel value among pixel areas. Due to this configuration, the calculated cost C (p, d) has a smaller value as the pixel value is closer to the pixel value of the reference-pixel area p, and has a larger value as the pixel value is farther from the pixel value of the reference-pixel area p.

As illustrated in FIG. 7, the cost-C adjuster 704 adjusts the cost C (p, d) of the reference-pixel area p calculated by the cost-C calculator 703 based on the degree of reliability. The cost-C adjuster 704 performs adjustment using Formula 1 below, to obtain the adjusted cost C' (p, d).

[Formula 1]

$$C'(p,d) = \left( (1 - Q(p))C(p,d) + Q(p)\sum_{k \in D}\frac{C(p,k)}{|D|} \right) \qquad (1)$$

In this formula, "D" indicates the maximum value of an amount of shift, and " k " indicates the count value of an amount of shift. Moreover, Q(p) indicates the degree of reliability of the cost C (p, d) of the reference-pixel area p. The degree of reliability Q(p) is calculated, for example, by using Formula 2 below.

[Formula 2]

$$Q(p) = \frac{C_{min2}}{C_{min1}} \qquad (2)$$

In this formula, $C_{min1}$ and $C_{min2}$ indicate the lowest cost and the second lowest cost among a plurality of costs C (p, d) calculated by varying the amount of shift d within a predetermined range (0 to D). Note also that the degree of reliability Q(p) that is calculated based on Formula 2 as above is used in Formula 1 as above upon normalizing the value calculated based on $C_{min1}$ and $C_{min2}$ to be greater than 0 and less than 1.0 and adjusting the normalized value so as to become closer to 1.0 as the degree of reliability is higher.

The adjusted cost C' (p, d) adjusted by the cost-C adjuster 704 is, for example, in the reference-pixel area p is included in an area with a little texture (an area where there are little changes in pixel value among neighboring pixel areas), and when the degree of reliability Q(p) is low, takes a larger value.

The distance-data acquisition unit 711 is an example of an acquisition unit, and obtains the distance data from the laser signal processor 240. In the present embodiment, the distance data obtained from the laser signal processor 240 is referred to as $Z_1$. The distance-data acquisition unit 711 notifies the cost-$C_1$ calculator 712 of the obtained distance data $Z_1$.

The cost-$C_1$ calculator 712 calculates and obtains a cost $C_1$ based on the distance data $Z_1$ provided by the distance-data acquisition unit 711. More specifically, the cost-Ci calculator 712 firstly calculates an amount of shift $d_1$ based on the distance data $Z_1$ using Formula 3 below. Accordingly, the pixel area that is at the position derived from the distance data $Z_1$ in the comparison image 310 is extracted.
[Formula 3]

$$d_l = \frac{Bf}{Z_l} \qquad (3)$$

In Formula 3 as above, "B" indicates the base-line length between the camera lenses 211 and the camera lenses 221, and "f" indicates the focal length between the camera lenses 211 and the camera lenses 221.

Subsequently, the cost-$C_1$ calculator 712 calculates a cost $C_1$ (p, $d_1$) at the position of the amount of shift $d_1$. In a similar manner to the calculation of a cost C (p, d) as above, the cost-Ci calculator 712 calculates a cost $C_1$ (p, $d_1$) as a degree of dissimilarity between the pixel value of the pixel area 311 at the position of the amount of shift $d_1$ and the pixel value of the reference-pixel area p.

The weighting adder 720 adds up the weighting using the adjusted cost C' (p, d) adjusted by the cost-C adjuster 704 and the cost $C_1$ (p, $d_1$) calculated by the cost-Ci calculator 712, based on Formula 4 below, to calculate a weighted cost.
[Formula 4]

$$\hat{C}(p,d) = w_d \left( (1 - Q(p))C(p,d) + Q(p)\sum_{k \in D}\frac{C(p,k)}{|D|} \right) + (1 - w_d)C_l(p,d_l) \qquad (4)$$

In this formula, wd is a weighting factor indicating to prioritize which one of the adjusted cost C' (p, d) adjusted by the cost-C adjuster 704 and the cost $C_1$ (p, $d_1$) calculated by the cost-$C_1$ calculator 712. When the adjusted cost C' (p, d) adjusted by the cost-C adjuster 704 is to be prioritized, the value of wd is increased. By contrast, when the cost $C_1$ (p, $d_1$) calculated by the cost-$C_1$ calculator 712 is to be prioritized, the value of wd is reduced.

More specifically, when the amount of shift $d \neq d_1$, the value of wd is increased. Due to this configuration, the weighted cost of the pixel area where the amount of shift $d \neq d_1$, in the pixel area 311 of the comparison image 310, can further be increased. Note also that the adjusted cost C' (p, d) has a larger value than that of, for example, an area with a little texture, and the weighted cost of the pixel area where the amount of shift $d \neq d_1$ has an even larger value when the value of wd is increased and the adjusted cost C' (p, d) is prioritized.

By contrast, when the amount of shift $d = d_1$, the value of wd is reduced. Due to this configuration, the weighted cost of the pixel area where the amount of shift $d = d_1$, in the pixel area 311 of the comparison image 310, can further be reduced. Note also that the cost $C_1$ (p, $d_1$) calculated by the cost-$C_1$ calculator 712 has a smaller value than that of the adjusted cost C' (p, d) calculated by the cost-C adjuster 704. Due to this configuration, when the value of wd is reduced

and the cost $C_1$ (p, $d_1$) calculated by the cost-Ci calculator 712 is prioritized, the weighted cost of the pixel area where the amount of shift d=$d_1$ has an even smaller value.

In other words, due to Formula 4, the difference in cost between the pixel area where the amount of shift d=$d_1$ and the other pixel areas can be made more significant as a weighted cost.

As a result, when corresponding pixel area is to be extracted based on the synthesis cost S calculated by the synthesis-cost calculator 620, it becomes easier to extract the pixel area in the comparison image 310 where d=$d_1$. In other words, the position 312 of the corresponding pixel area that corresponds to the reference-pixel area p can precisely be extracted.

In Formula 4 as above, the value of wd may be a fixed value, or may vary according to the value of distance data $Z_1$. Alternatively, the value of wd may vary according to the ambient environment (for example, depending on whether it is during the daytime or nighttime).

(3) Functional Configuration of Synthesis-cost Calculator 620

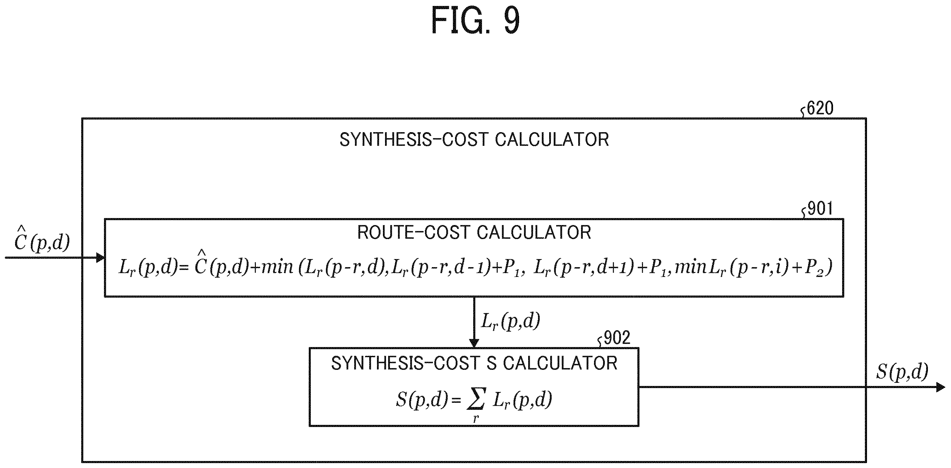

FIG. 9 is a diagram illustrating a detailed functional configuration of the synthesis-cost calculator 620, according to the present embodiment. As illustrated in FIG. 9, the synthesis-cost calculator 620 includes a route-cost calculator 901, and a synthesis-cost S calculator 902.

Once the route-cost calculator 901 obtains a weighted cost from the weighting adder 720, the route-cost calculator 901 calculates a route cost $L_r$ (p, d) based on Formula 5 below.

[Formula 5]

$$L_r(p,d) = \hat{C}(p,d) + \min\left(L_r(p-r,d), L_r(p-r,d-1) + P_1, \quad L_r(p-r,d+1) + P_1, \min_i L_r(p-r,i) + P_2\right) \qquad (5)$$

Note that Formula 5 above is a formula where the cost C (p, d) is replaced with a weighted cost in a commonly-used formula for route costs $L_r$ that adopts semi-global matching (SGM). Moreover, in Formula 5 as above, $P_1$ and $P_2$ are fixed parameters.

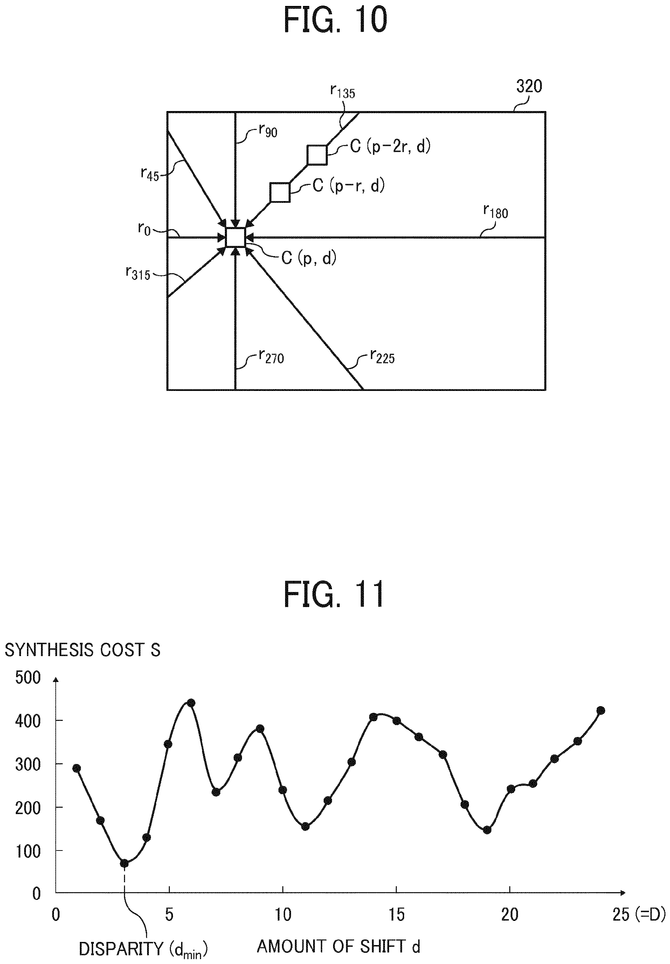

According to Formula 5 as above, the route-cost calculator 901 adds a minimum value for a route cost $L_r$ in the pixel areas of in r-directions, as illustrated in FIG. 10, to the weighted cost of the reference-pixel area p, to calculate a route cost $L_r$ (p, d).

FIG. 10 is a diagram illustrating r-directions referred to in the calculation of a route cost $L_r$ (p, d), according to the present embodiment.

As illustrated in FIG. 10, the route-cost calculator 901 calculates a route cost $L_r$ (for example, $L_{r135}$ (p-2r, d)) for the pixel area at the farthest edge in an r-direction of the reference-pixel area p (for example, $r_{135}$ direction). Subsequently, the route-cost calculator 901 calculates a route cost $L_r$ ($L_{r135}$ (p-r, d)) along the r-direction. In the present embodiment, the route-cost calculator 901 repeats the above processes to calculate and obtain route cost $L_r$ (for example, $L_{r135}$ (p, d)) for eight directions. Accordingly, the route costs $L_{r0}$ (p, d) to $L_{r135}$ (p, d) are obtained.

The synthesis-cost S calculator 902 uses Formula 6 to calculate a synthesis cost S (p, d) based on the eight-directional route costs $L_{r0}$ (p, d) to $L_{r315}$ (p, d) calculated by the route-cost calculator 901.

[Formula 6]

$$S(p,d) = \sum_r L_r(p,d) \qquad (6)$$

The synthesis-cost S calculator 902 notifies the disparity computation unit 630 of the calculated synthesis cost S (p, d).

(4) Processes of Disparity Computation Unit 630

The disparity computation unit 630 obtains a synthesis cost S (p, d) in the reference-pixel area p provided by the synthesis-cost S calculator 902.

FIG. 11 is a diagram illustrating a result of calculating the synthesis cost S in the reference-pixel area p, according to the present embodiment.

The disparity computation unit 630 computes and obtains the amount of shift $d_{min}$ where the synthesis cost S (p, d) becomes smallest, within a predetermined range (0 to D), to extract the corresponding pixel area in the comparison image 310. Due to this configuration, the disparity computation unit 630 can obtain an amount of shift $d_{min}$ as a result of the disparity computation performed for between the extracted corresponding pixel area and the reference-pixel area p.

Note also that the disparity computation unit 630 performs similar processes for other reference-pixel areas in the reference image 320, and obtains a result of the disparity computation. As a result, a disparity image is generated, and the generated disparity image is stored in the memory 260.

<6, Disparity Image Generating Processes by Disparity Image Generator 600>

Next, the processing flow of the disparity image generating processes by the disparity image generator 600 is described.

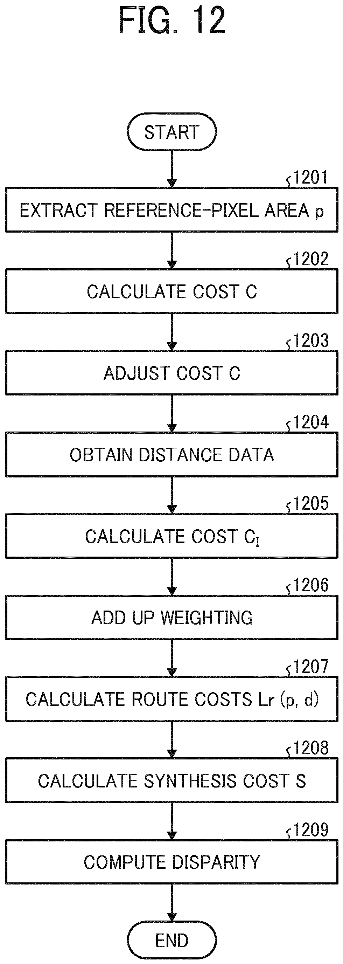

FIG. 12 is a flowchart of the disparity image generating processes by the disparity image generator 600, according to the present embodiment.

The flowchart illustrated in FIG. 12 depicts the processes of computing a disparity for one reference-pixel area p, and the disparity image generator 600 executes the processes in the flowchart of FIG. 12 for a plurality of reference-pixel areas to generate a disparity image.

In a step S1201, the reference-image acquisition unit 701 obtains the reference image 320 to extract a reference-pixel area p.

In a step S1202, the cost-C calculator 703 calculates and obtains the cost C (p, d) based on the pixel value of the pixel area 311 at the position of the amount of shift d in the comparison image 310 obtained by the comparison-image acquisition unit 702, and the pixel value of the reference-pixel area p.

In a step S1203, The cost-C adjuster 704 adjusts the calculated cost C (p, d) based on the degree of reliability Q(p) to obtain an adjusted cost C' (p, d).

In a step S1204, the distance-data acquisition unit 711 obtains the distance data $Z_1$ that indicates the distance to an object in the real space that lies at the position of the reference-pixel area p.

In a step S1205, the cost-$C_1$ calculator 712 calculates and obtains a cost $C_1$ based on the distance data $Z_1$ obtained by the distance-data acquisition unit 711.

In a step S1206, the weighting adder 720 adds up the weighting of the adjusted cost C' (p, d) adjusted by the cost-C adjuster 704 and the cost $C_1$ (p, d) calculated by the cost-$C_1$ calculator 712 to calculate a weighted cost.

In a step S1207, the route-cost calculator 901 calculates and obtains route costs $L_r$ (p, d) using the calculated weighted cost.

In a step S1208, the synthesis-cost S calculator 902 calculates and obtains a synthesis cost S (p, d) based on the obtained route costs $L_r$ (p, d).

In a step S1209, the disparity computation unit 630 calculates the amount of shift (dmin) where the synthesis cost S (p, d) becomes smallest. As a result, extract the corresponding pixel area from the comparison image 310 and obtain a result of the disparity computation performed for between the extracted corresponding pixel area and the reference-pixel area p.

As described above, in the disparity computation system 100 according to the present embodiment, the LiDAR range finder 120 measures the distance to an object in the real space that lies at the position of the reference-pixel area p to obtain the distance data $Z_1$. A cost $C_1$ is calculated and obtained based on the amount of shift $d_1$ that corresponds to the obtained distance data $Z_1$. The weighting of the adjusted cost C' that is obtained by adjusting the cost C of the reference-pixel area p based on the degree of reliability and the weighting of the cost $C_1$ that is calculated based on the distance data $Z_1$ are added up using a weighting factor wd, to calculate weighted costs. The calculated weighted costs are combined to obtain a synthesis cost S. The corresponding pixel area in the comparison image that corresponds to the reference-pixel area is extracted based on the obtained synthesis cost S, and a disparity of the reference-pixel area p is computed.

Due to the configuration as described above, a lower weighted cost than the weighted costs of other pixel areas can be calculated for the pixel area in the comparison image that is at the position derived from the distance data measured by the LiDAR range finder. Due to this configuration, when a corresponding pixel area is to be extracted, it becomes easier to extract the pixel area as a corresponding pixel area by using a synthesis cost obtained by combining the weighted costs, even if the area is, for example, a pixel area with a little texture.

In other words, with the disparity computation system 100 according to the present embodiment, even in areas with a little texture where it used to be difficult to extract a corresponding pixel area, a corresponding pixel area can be extracted with precision, and disparity computation can be performed with a high degree of precision.

<Alternative Embodiment>

In the embodiment described above, cases in which a cost C is calculated for each pixel area are described.

However, a cost C may be calculated for every pixel. In such a configuration, the cost calculator 610 extracts a reference-pixel from the reference image 320, and calculates a cost C with reference to each pixel of the comparison image 310. In other words, a "pixel area" in the embodiment as described above includes one or a plurality of pixels.

In the embodiment as described above, cases in which the stereo camera unit 110 and the LiDAR range finder 120 are formed as a single integrated unit are described. However, the stereo camera unit 110 and the LiDAR range finder 120 may be configured independently.

In the embodiment described above, cases in which the stereo camera unit 110 and the LiDAR range finder 120 are combined to server as a three-dimensional sensor are described. However, a different three-dimensional sensor may be combined with the stereo camera unit 110 to configure a disparity computation system 100. Such a different three-dimensional sensor may be, for example, a millimeter-wave radar device.

In the embodiment described above, the disparity computation system 100 includes a three-dimensional sensor (including the stereo camera unit 110 and the LiDAR range finder 120) and the control board housing 202. However, it is not always necessary for the disparity computation system 100 to include a three-dimensional sensor, but it is satisfactory as long as at least a circuit board that serves as the rangefinder processing unit 250 is included in the control board housing 202.

In the embodiment described above, the rangefinder processing unit 250 is configured by a dedicated integrated circuit. However, for example, a recording medium storing the program codes of software that implements the functions of the rangefinder processing unit 250 may be provided for the disparity computation system 100 to implement the functions of the rangefinder processing unit 250. In such a configuration, a computer of the disparity computation system 100 reads and executes the program codes stored in a recording medium, thereby implementing the functions of the rangefinder processing unit 250.

In the embodiment described above, the disparity computation system 100 is installed in the vehicle 140. However, the disparity computation system 100 may be installed, for example, in a motorbike, a bicycle, a wheelchair, and an agricultural cultivator. Alternatively, the disparity computation system 100 may be installed, for example, in a mobile object such as a robot, or in an industrial robot that is disposed in a fixed manner in factory automation (FA).

While the invention has been illustrated by the described embodiments, the invention may be implemented within the scope of the appended claims.

The present invention can be implemented in any convenient form, for example using dedicated hardware, or a mixture of dedicated hardware and software. The present invention may be implemented as computer software implemented by one or more networked processing apparatuses. The network can comprise any conventional terrestrial or wireless communications network, such as the Internet. The processing apparatuses can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium. The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

The hardware platform includes any desired kind of hardware resources including, for example, a central processing unit (CPU), a random access memory (RAM), and a hard disk drive (HDD). The CPU may be implemented by any desired kind of any desired number of processor. The RAM may be implemented by any desired kind of volatile or non-volatile memory. The HDD may be implemented by any desired kind of non-volatile memory capable of storing a large amount of data. The hardware resources may additionally include an input device, an output device, or a network device, depending on the type of the apparatus. Alternatively, the HDD may be provided outside of the apparatus as long as the HDD is accessible. In this example, the CPU, such as a cache memory of the CPU, and the RAM may function as a physical memory or a primary memory of the apparatus, while the HDD may function as a secondary memory of the apparatus.

## Claims

1. A disparity computation system (100) comprising:

   an acquisition unit (100, 711) configured to obtain a stereo image comprising a reference image (320) and a comparison image (310) from a stereo camera unit (110), and distance data ($Z_1$) indicating distance to an object in real space that lies at a position of a reference-pixel area (p) in the reference image (320) from another distance sensor (120);

a calculation unit (610) configured to calculate:

a first cost (C), indicating a degree of dissimilarity between the reference-pixel area (p) and a plurality of pixel areas in the comparison image (310), based on a difference between a pixel value of the reference pixel area (p) and pixel values of the plurality of pixel areas;

a second cost ($C_1$), indicating a degree of dissimilarity between the reference-pixel area (p) and a pixel area (311) at the position derived from the obtained distance data ($Z_1$) in the comparison image (310), based on a difference between the pixel value of the reference pixel area (p) and a pixel value of the pixel area (311) that is at the position derived from the distance data ($Z_1$); and

a weighted cost ($\hat{C}$),

wherein the calculation unit (610) calculates the weighted cost ($\hat{C}$) by combining the first cost (C) and the second cost ($C_1$), said combining being based on weighted adding up of costs, said weighted adding up prioritizing the first cost (C) when calculating the weighted cost ($\hat{C}$) for the other pixel areas in the comparison image (310) and prioritizing the second cost when calculating the weighted cost ($\hat{C}$) for the pixel area (311) that is at the position derived from the distance data ($Z_1$); and

a computation unit (630) configured to compute a disparity using the weighted cost ($\hat{C}$) in a cost based matching of the pixel areas in the reference image (320) and the comparison image (310),

wherein the calculation unit (610) calculates the weighted cost ($\hat{C}$) for possible disparity shifts d for the stereo image and for the possible disparity shift $d_1$ derived from the other distance sensor (120), such as to make more significant the difference in cost between pixel areas where $d = d_1$ and other pixel areas for which $d \neq d_1$.

2. The disparity computation system (100) according to claim 1, wherein
the computation unit (630) extracts a corresponding pixel area in the comparison image (310) that corresponds to the reference-pixel area (p) based on a synthesis result (S), the synthesis result (S) being derived from combining the weighted cost ($\hat{C}$) along a plurality of routes such as to minimize the combined cost, to compute an estimated disparity based on the synthesis result (S).

3. The disparity computation system (100) according to claim 1 or 2, wherein
the calculation unit (610) controls the first cost (C) to be smaller than the second cost ($C_1$) when calculating the weighted cost ($\hat{C}$).

4. The disparity computation system (100) according to any one of claims 1 to 3, wherein
the calculation unit (610) changes a weighting factor used for combining the first cost (C) and the second cost ($C_1$) according to the distance data ($Z_1$) or an ambient environment when the distance data ($Z_1$) is obtained.

5. The disparity computation system (100) according to any one of claims 1 to 4, wherein
the stereo camera unit (110) comprises a first image sensing device (111) configured to capture the reference image (320), and a second image sensing device (112) configured to capture the comparison image (310); and
the distance sensor (120) is a LiDAR device (120) configured to measure distance to the object.

6. A mobile object (140) comprising the disparity computation system (100) according to any one of claims 1 to 5.

7. The disparity computation device (100) according to claim 1, wherein
the calculation unit (610) controls the second cost ($C_1$) to have a greater impact on the weighted cost ($\hat{C}$) than the first cost (C).

8. A processor-implemented method of computing a disparity, the method comprising:

obtaining a stereo image comprising a reference image (320) and a comparison image (310) from a stereo camera unit (110);
obtaining (S1204) distance data ($Z_1$) indicating distance to an object in real space that lies at a position of a reference-pixel area (p) in a reference image (320) from another distance sensor (120);
calculating (S1202) a first cost (C), indicating a degree of dissimilarity between the reference-pixel area (p) and a plurality of pixel areas in a comparison image (310), based on a difference between a pixel value of the reference pixel area (p) and pixel values of the plurality of pixel areas;
calculating (S1205) a second cost ($C_1$), indicating a degree of dissimilarity between the reference-pixel area (p) and a pixel area at the position derived from the obtained distance data ($Z_1$) in the comparison image (310), based on a difference between the pixel value of the reference pixel area (p) and a pixel value of the pixel area (311) that is at the position derived from the distance data ($Z_1$);

calculating (S1206) a weighted cost ($\hat{C}$),

wherein the calculating (S1202) includes calculating the weighted cost ($\hat{C}$) by combining the first cost (C) and the second cost ($C_1$) into the weighted cost ($\hat{C}$), said combining being based on weighted adding up of costs, said weighted adding up prioritizing first cost (C) when calculating the weighted cost ($\hat{C}$) for the other pixel areas in the comparison image (310) and prioritizing the second cost when calculating the weighted cost ($\hat{C}$) for the pixel area (311) that is at the position derived from the distance data ($Z_1$); and

computing (S1209) a disparity using the weighted cost ($\hat{C}$) in a cost based matching of the pixel areas in the reference image (320) and the comparison image (310),

wherein the calculating (S1202-S1206) includes calculating the weighted cost ($\hat{C}$), for possible disparity shifts d for the stereo image and for the possible disparity shift $d_1$ derived from the other distance sensor (120), such as to make more significant the difference in cost between pixel areas where $d = d_1$ and other pixel areas for which $d \neq d_1$.

9. The processor-implemented method of computing a disparity of claim 8, further comprising:

extracting a corresponding pixel area in the comparison image (310) that corresponds to the reference pixel area (p) based on a synthesis result (S), the synthesis result (S) being derived from combining the weighted cost ($\hat{C}$) along a plurality of routes such as to minimize the combined cost, to compute an estimated disparity of the reference pixel area (p) based on the synthesis result (S).

10. A carrier means carrying computer readable code implementing the method of any of claims 8-9 such that a computer system, when executing the code, performs the method of any of claims 8-9.

**Patentansprüche**

1. Disparitätsberechnungssystem (100), umfassend:

eine Erfassungseinheit (100, 711), die dafür konfiguriert ist, ein Stereobild, das ein Referenzbild (320) und ein Vergleichsbild (310) umfasst, von einer Stereokameraeinheit (110) zu erlangen, und Entfernungsdaten ($Z_1$), welche die Entfernung zu einem Objekt im realen Raum angeben, das an einer Position eines Referenz-Pixelbereichs (p) im Referenzbild (320) liegt, von einem anderen Entfernungssensor (120) zu erlangen; eine Kalkulationseinheit (610), die dafür konfiguriert ist, Folgendes zu kalkulieren:

erste Kosten (C), die einen Grad der Unähnlichkeit zwischen dem Referenz-Pixelbereich (p) und einer Vielzahl von Pixelbereichen im Vergleichsbild (310) angeben, und zwar auf der Grundlage einer Differenz zwischen einem Pixelwert des Referenz-Pixelbereichs (p) und Pixelwerten der Vielzahl von Pixelbereichen; zweite Kosten ($C_1$), die einen Grad der Unähnlichkeit zwischen dem Referenz-Pixelbereich (p) und einem Pixelbereich (311) an der Position angeben, die aus den erlangten Entfernungsdaten ($Z_1$) im Vergleichsbild (310) abgeleitet ist, und zwar auf der Grundlage einer Differenz zwischen dem Pixelwert des Referenz-Pixelbereichs (p) und einem Pixelwert des Pixelbereichs (311), der sich an der aus den Entfernungsdaten ($Z_1$) abgeleiteten Position befindet; und gewichtete Kosten ($\hat{C}$),

worin die Kalkulationseinheit (610) die gewichteten Kosten ($\hat{C}$) durch Kombinieren der ersten Kosten (C) und der zweiten Kosten ($C_1$) kalkuliert, wobei das Kombinieren auf dem gewichteten Addieren von Kosten beruht, wobei das gewichtete Addieren den ersten Kosten (C) Priorität gibt, wenn die gewichteten Kosten ($\hat{C}$) für die anderen Pixelbereiche im Vergleichsbild (310) kalkuliert werden, und den zweiten Kosten Priorität gibt, wenn die gewichteten Kosten ($\hat{C}$) für den Pixelbereich (311) kalkuliert werden, der sich an der aus den Entfernungsdaten ($Z_1$) abgeleiteten Position befindet; und eine Berechnungseinheit (630), die dafür konfiguriert ist, eine Disparität unter Verwendung der gewichteten Kosten ($\hat{C}$) in einem kostenbasierten Abgleich der Pixelbereiche im Referenzbild (320) und im Vergleichsbild (310) zu berechnen,

worin die Kalkulationseinheit (610) die gewichteten Kosten ($\hat{C}$) für mögliche Disparitätsverschiebungen d für das Stereobild und für die vom anderen Entfernungssensor (120) abgeleitete mögliche Disparitätsverschiebung $d_1$ kalkuliert, um dadurch die Kostendifferenz zwischen Pixelbereichen, wo $d = d_1$ ist, und anderen Pixelbereichen, für die $d \neq d_1$ ist, signifikanter zu machen.

**2.** Disparitätsberechnungssystem (100) nach Anspruch 1, worin
die Berechnungseinheit (630) auf der Grundlage eines Synthese-Ergebnisses (S) einen entsprechenden Pixelbereich im Vergleichsbild (310) extrahiert, der dem Referenz-Pixelbereich (p) entspricht, wobei das Synthese-Ergebnis (S) aus dem Kombinieren der gewichteten Kosten ($\hat{C}$) entlang einer Vielzahl von Routen abgeleitet wird, um dadurch die kombinierten Kosten zu minimieren, um auf der Grundlage des Synthese-Ergebnisses (S) eine geschätzte Disparität zu berechnen.

**3.** Disparitätsberechnungssystem (100) nach Anspruch 1 oder 2, worin
die Kalkulationseinheit (610) die ersten Kosten (C) so steuert, dass sie kleiner als die zweiten Kosten ($C_1$) sind, wenn die gewichteten Kosten ($\hat{C}$) kalkuliert werden.

**4.** Disparitätsberechnungssystem (100) nach einem der Ansprüche 1 bis 3, worin
die Kalkulationseinheit (610) einen Wichtungsfaktor, der zum Kombinieren der ersten Kosten (C) und der zweiten Kosten ($C_1$) verwendet wird, gemäß den Entfernungsdaten ($Z_1$) oder einer äußeren Umgebung, als die Entfernungsdaten ($Z_1$) erlangt wurden, ändert.

**5.** Disparitätsberechnungssystem (100) nach einem der Ansprüche 1 bis 4, worin die Stereokameraeinheit (110) umfasst: eine erste Bilderfassungsvorrichtung (111), die dafür konfiguriert ist, das Referenzbild (320) aufzunehmen, und eine zweite Bilderfassungsvorrichtung (112), die dafür konfiguriert ist, das Vergleichsbild (310) aufzunehmen; und
der Entfernungssensor (120) eine LiDAR-Vorrichtung (120) ist, die dafür konfiguriert ist, die Entfernung zum Objekt zu messen.

**6.** Mobiles Objekt (140), umfassend das Disparitätsberechnungssystem (100) nach einem der Ansprüche 1 bis 5.

**7.** Disparitätsberechnungssystem (100) nach Anspruch 1, worin
die Kalkulationseinheit (610) die zweiten Kosten ($C_1$) so steuert, dass sie einen größeren Einfluss auf die gewichteten Kosten ($\hat{C}$) haben als die ersten Kosten (C).

**8.** Prozessorimplementiertes Verfahren zum Berechnen einer Disparität, wobei das Verfahren umfasst:

Erlangen eines Stereobildes, das ein Referenzbild (320) und ein Vergleichsbild (310) umfasst, von einer Stereokameraeinheit (110);
Erlangen (S1204) von Entfernungsdaten ($Z_1$), welche die Entfernung zu einem Objekt im realen Raum angeben, das an einer Position eines Referenz-Pixelbereichs (p) in einem Referenzbild (320) liegt, von einem anderen Entfernungssensor (120);
Kalkulieren (S1202) von ersten Kosten (C), die einen Grad der Unähnlichkeit zwischen dem Referenz-Pixelbereich (p) und einer Vielzahl von Pixelbereichen in einem Vergleichsbild (310) angeben, und zwar auf der Grundlage einer Differenz zwischen einem Pixelwert des Referenz-Pixelbereichs (p) und Pixelwerten der Vielzahl von Pixelbereichen;
Kalkulieren (S1205) von zweiten Kosten ($C_1$), die einen Grad der Unähnlichkeit zwischen dem Referenz-Pixelbereich (p) und einem Pixelbereich (311) an der Position angeben, die aus den erlangten Entfernungsdaten ($Z_1$) im Vergleichsbild (310) abgeleitet ist, und zwar auf der Grundlage einer Differenz zwischen dem Pixelwert des Referenz-Pixelbereichs (p) und einem Pixelwert des Pixelbereichs (311), der sich an der aus den Entfernungsdaten ($Z_1$) abgeleiteten Position befindet;
Kalkulieren (S1206) von gewichteten Kosten ($\hat{C}$),
worin das Kalkulieren (S1202) einschließt: Kalkulieren der gewichteten Kosten ($\hat{C}$) durch Kombinieren der ersten Kosten (C) und der zweiten Kosten ($C_1$) zu den gewichteten Kosten ($\hat{C}$), wobei das Kombinieren auf dem gewichteten Addieren von Kosten beruht, wobei das gewichtete Addieren den ersten Kosten (C) Priorität gibt, wenn die gewichteten Kosten ($\hat{C}$) für die anderen Pixelbereiche im Vergleichsbild (310) kalkuliert werden, und den zweiten Kosten Priorität gibt, wenn die gewichteten Kosten ($\hat{C}$) für den Pixelbereich (311) kalkuliert werden, der sich an der aus den Entfernungsdaten ($Z_1$) abgeleiteten Position befindet; und
Berechnen (S1209) einer Disparität unter Verwendung der gewichteten Kosten ($\hat{C}$) in einem kostenbasierten Abgleich der Pixelbereiche im Referenzbild (320) und im Vergleichsbild (310),
worin das Kalkulieren (S1202-S1206) einschließt: Kalkulieren der gewichteten Kosten ($\hat{C}$) für mögliche Disparitätsverschiebungen d für das Stereobild und für die vom anderen Entfernungssensor (120) abgeleitete mögliche Disparitätsverschiebung $d_1$, um dadurch die Kostendifferenz zwischen Pixelbereichen, wo $d = d_1$ ist, und anderen Pixelbereichen, für die $d \neq d_1$ ist, signifikanter zu machen.

**9.** Prozessorimplementiertes Verfahren zum Berechnen einer Disparität nach Anspruch 8, ferner umfassend:
auf einem Synthese-Ergebnis (S) beruhendes Extrahieren eines entsprechenden Pixelbereichs im Vergleichsbild (310), der dem Referenz-Pixelbereich (p) entspricht, wobei das Synthese-Ergebnis (S) aus dem Kombinieren der gewichteten Kosten ($\hat{C}$) entlang einer Vielzahl von Routen abgeleitet wird, um dadurch die kombinierten Kosten zu minimieren, um auf der Grundlage des Synthese-Ergebnisses (S) eine geschätzte Disparität zu berechnen.

**10.** Trägermittel, das computerlesbaren Code trägt, der das Verfahren nach einem der Ansprüche 8 bis 9 implementiert, sodass ein Computersystem, wenn es den Code ausführt, das Verfahren nach einem der Ansprüche 8 bis 9 ausführt.

**Revendications**

**1.** Système de calcul de disparité (100) comprenant :

une unité d'acquisition (100, 711) qui est configurée pour obtenir une image stéréo qui comprend une image de référence (320) et une image de comparaison (310) en provenance d'une unité de caméra stéréo (110), et des données de distance ($Z_1$) qui indiquent la distance par rapport à un objet dans un espace réel qui se situe à une position d'une zone de pixel de référence (p) dans l'image de référence (320) en provenance d'un autre capteur de distance (120) ;
une unité de calcul (610) qui est configurée pour calculer :

un premier coût (C), qui indique un degré de dissemblance entre la zone de pixel de référence (p) et une pluralité de zones de pixel dans l'image de comparaison (310), sur la base d'une différence entre une valeur de pixel de la zone de pixel de référence (p) et des valeurs de pixel de la pluralité de zones de pixel ;
un second coût ($C_1$), qui indique un degré de dissemblance entre la zone de pixel de référence (p) et une zone de pixel (311) à la position qui est dérivée des données de distance ($Z_1$) obtenues dans l'image de comparaison (310), sur la base d'une différence entre la valeur de pixel de la zone de pixel de référence (p) et une valeur de pixel de la zone de pixel (311) qui est à la position qui est dérivée des données de distance ($Z_1$) ; et
un coût pondéré ($\hat{C}$) ;
dans lequel l'unité de calcul (610) calcule le coût pondéré ($\hat{C}$) en combinant le premier coût (C) et le second coût ($C_1$), ladite combinaison étant basée sur l'addition pondérée de coûts, ladite addition pondérée donnant la priorité au premier coût (C) lors du calcul du coût pondéré ($\hat{C}$) pour les autres zones de pixel dans l'image de comparaison (310) et donnant la priorité au second coût lors du calcul du coût pondéré ($\hat{C}$) pour la zone de pixel (311) qui est à la position qui est dérivée des données de distance ($Z_1$) ; et
une unité de calcul (630) qui est configurée pour calculer une disparité en utilisant le coût pondéré ($\hat{C}$) lors d'une mise en correspondance basée sur le coût des zones de pixel dans l'image de référence (320) et dans l'image de comparaison (310) ;
dans lequel l'unité de calcul (610) calcule le coût pondéré ($\hat{C}$) pour des décalages de disparité possibles d pour l'image stéréo et pour le décalage de disparité possible $d_1$ qui est dérivé de l'autre capteur de distance (120), de manière à rendre plus significative la différence en termes de coûts entre des zones de pixel pour lesquelles d = $d_1$ et d'autres zones de pixel pour lesquelles d ≠ $d_1$.

**2.** Système de calcul de disparité (100) selon la revendication 1, dans lequel :
l'unité de calcul (630) extrait une zone de pixel correspondante dans l'image de comparaison (310) qui correspond à la zone de pixel de référence (p) sur la base d'un résultat de synthèse (S), le résultat de synthèse (S) étant dérivé de la combinaison du coût pondéré ($\hat{C}$) sur une pluralité de trajets de manière à minimiser le coût combiné, afin de calculer une disparité estimée sur la base du résultat de synthèse (S).

**3.** Système de calcul de disparité (100) selon la revendication 1 ou 2, dans lequel
l'unité de calcul (610) commande le premier coût (C) de sorte qu'il soit inférieur au second coût ($C_1$) lors du calcul du coût pondéré ($\hat{C}$).

**4.** Système de calcul de disparité (100) selon l'une quelconque des revendications 1 à 3, dans lequel
l'unité de calcul (610) modifie un facteur de pondération qui est utilisé pour combiner le premier coût (C) et le second coût ($C_1$) en fonction des données de distance ($Z_1$) ou de l'environnement ambiant lorsque les données de distance ($Z_1$) sont obtenues.

**5.** Système de calcul de disparité (100) selon l'une quelconque des revendications 1 à 4, dans lequel l'unité de caméra stéréo (110) comprend un premier dispositif de détection d'image (111) qui est configuré pour capturer l'image de référence (320) et un second dispositif de détection d'image (112) qui est configuré pour capturer l'image de comparaison (310) ; et le capteur de distance (120) est un dispositif LiDAR (120) qui est configuré pour mesurer la distance par rapport à l'objet.

**6.** Objet mobile (140) comprenant le système de calcul de disparité (100) selon l'une quelconque des revendications 1 à 5.

**7.** Système de calcul de disparité (100) selon la revendication 1, dans lequel l'unité de calcul (610) commande le second coût ($C_1$) de telle sorte qu'il ait un impact plus important sur le coût pondéré ($\hat{C}$) que le premier coût (C).

**8.** Procédé mis en oeuvre par processeur consistant à calculer une disparité, le procédé comprenant :

l'obtention d'une image stéréo qui comprend une image de référence (320) et une image de comparaison (310) en provenance d'une unité de caméra stéréo (110) ;

l'obtention (S1204) de données de distance ($Z_1$) qui indiquent la distance par rapport à un objet dans un espace réel qui se situe à une position d'une zone de pixel de référence (p) dans une image de référence (320) en provenance d'un autre capteur de distance (120) ;

le calcul (S1202) d'un premier coût (C), qui indique un degré de dissemblance entre la zone de pixel de référence (p) et une pluralité de zones de pixel dans une image de comparaison (310), sur la base d'une différence entre une valeur de pixel de la zone de pixel de référence (p) et de valeurs de pixel de la pluralité de zones de pixel ;

le calcul (S1205) d'un second coût ($C_1$), qui indique un degré de dissemblance entre la zone de pixel de référence (p) et une zone de pixel à la position qui est dérivée des données de distance ($Z_1$) obtenues dans l'image de comparaison (310), sur la base d'une différence entre la valeur de pixel de la zone de pixel de référence (p) et une valeur de pixel de la zone de pixel (311) qui est à la position qui est dérivée des données de distance ($Z_1$) ;

le calcul (S1206) d'un coût pondéré ($\hat{C}$) ;

dans lequel le calcul (S1202) inclut le calcul du coût pondéré ($\hat{C}$) en combinant le premier coût (C) et le second coût ($C_1$) selon le coût pondéré ($\hat{C}$), ladite combinaison étant basée sur l'addition pondérée de coûts, ladite addition pondérée donnant la priorité au premier coût (C) lors du calcul du coût pondéré ($\hat{C}$) pour les autres zones de pixel dans l'image de comparaison (310) et donnant la priorité au second coût lors du calcul du coût pondéré ($\hat{C}$) pour la zone de pixel (311) qui est au niveau de la position qui est dérivée des données de distance ($Z_1$) ; et

le calcul (S1209) d'une disparité en utilisant le coût pondéré ($\hat{C}$) lors d'une mise en correspondance basée sur le coût des zones de pixel dans l'image de référence (320) et dans l'image de comparaison (310) ;

dans lequel le calcul (S1202 - S1206) inclut le calcul du coût pondéré ($\hat{C}$) pour des décalages de disparité possibles d pour l'image stéréo et pour le décalage de disparité possible $d_1$ qui est dérivé de l'autre capteur de distance (120), de manière à rendre plus significative la différence en termes de coûts entre des zones de pixel pour lesquelles d = $d_1$ et d'autres zones de pixel pour lesquelles d ≠ $d_1$.

**9.** Procédé mis en oeuvre par processeur consistant à calculer une disparité selon la revendication 8, comprenant en outre :

l'extraction d'une zone de pixel correspondante dans l'image de comparaison (310) qui correspond à la zone de pixel de référence (p) sur la base d'un résultat de synthèse (S), le résultat de synthèse (S) étant dérivé de la combinaison du coût pondéré ($\hat{C}$) sur une pluralité de trajets de manière à minimiser le coût combiné, afin de calculer une disparité estimée de la zone de pixel de référence sur la base du résultat de synthèse (S).

**10.** Moyen de support porteur d'un code qui peut être lu par ordinateur et qui met en oeuvre le procédé selon l'une quelconque des revendications 8 à 9 de telle sorte qu'un système informatique, lors de l'exécution du code, réalise le procédé selon l'une quelconque des revendications 8 à 9.

# FIG. 1

FIG. 2

FIG. 3A

FIG. 3B

310

320

311

312

330

DISPARITY

p

x x´

x

y

# FIG. 4A

# FIG. 4B

DISTANCE [m]

300

250

200

150

100

50

0

28 27 26 25 24 23 22 21 20 19 18 17 16 15 14 13 12 11 10 9 8 7 6 5 4 3 2 1

DISPARITY (NUMBER OF PIXELS)

# FIG. 5A

# FIG. 5B

DISTANCE [m]

300

250

200

150

100

50

0

RESPONSE TIME [sec]

# FIG. 6

COMPARISON DISTANCE REFERENCE
IMAGE DATA IMAGE

⌇250

RANGEFINDER
PROCESSING UNIT

⌇600

DISPARITY IMAGE GENERATOR

| ⌇610 | ⌇620 | ⌇630 |
|---|---|---|
| COST CALCULATOR | SYNTHESIS-COST CALCULATOR | DISPARITY COMPUTATION UNIT |

DISPARITY
IMAGE

# FIG. 7

REFERENCE IMAGE

COMPARISON IMAGE

DISTANCE DATA

**610**

COST CALCULATOR

**701** REFERENCE-IMAGE ACQUISITION UNIT

**702** COMPARISON-IMAGE ACQUISITION UNIT

**711** DISTANCE-DATA ACQUISITION UNIT

$Z_I$

**703** COST-C CALCULATOR

$$C(p,d)$$

**712** COST-$C_I$ CALCULATOR

$$d_I = \frac{Bf}{Z_I} \longrightarrow C_I(p,d_I)$$

$C(p,d)$

**704** COST-C ADJUSTER

$$C'(p,d) = \left[ (1\_Q(p))C(p,d) + Q(p) \sum_{k \in D} \frac{C(p,k)}{|D|} \right]$$

$C_I$

$C'(p,d)$

**720** WEIGHTING ADDER

$$\hat{C}(p,d) = w_d \left[ (1\_Q(p))C(p,d) + Q(p) \sum_{k \in D} \frac{C(p,k)}{|D|} \right] + (1-w_d)C_I(p,d_I)$$

$\hat{C}(p,d)$

# FIG. 8A

310

D

311

d

x

y

# FIG. 8B

320

p

x

y

# FIG. 9

**SYNTHESIS-COST CALCULATOR** _620_

**ROUTE-COST CALCULATOR** _901_

$\hat{C}(p,d)$

$$L_r(p,d) = \hat{C}(p,d) + min\left(L_r(p\text{-}r,d), L_r(p\text{-}r,d\text{-}1) + P_1,\ L_r(p\text{-}r,d\text{+}1) + P_1, min\, L_r(p\text{-}r,i) + P_2\right)$$

$L_r(p,d)$

**SYNTHESIS-COST S CALCULATOR** _902_

$$S(p,d) = \sum_r L_r(p,d)$$

$S(p,d)$

# FIG. 10

# FIG. 11

# FIG. 12

```
                    ┌─────────┐
                    │  START  │
                    └─────────┘
                         │
                         ▼                    ⌐1201
        ┌───────────────────────────────────────┐
        │     EXTRACT REFERENCE-PIXEL AREA p     │
        └───────────────────────────────────────┘
                         │
                         ▼                    ⌐1202
        ┌───────────────────────────────────────┐
        │            CALCULATE COST C            │
        └───────────────────────────────────────┘
                         │
                         ▼                    ⌐1203
        ┌───────────────────────────────────────┐
        │             ADJUST COST C              │
        └───────────────────────────────────────┘
                         │
                         ▼                    ⌐1204
        ┌───────────────────────────────────────┐
        │          OBTAIN DISTANCE DATA          │
        └───────────────────────────────────────┘
                         │
                         ▼                    ⌐1205
        ┌───────────────────────────────────────┐
        │           CALCULATE COST C_I           │
        └───────────────────────────────────────┘
                         │
                         ▼                    ⌐1206
        ┌───────────────────────────────────────┐
        │            ADD UP WEIGHTING            │
        └───────────────────────────────────────┘
                         │
                         ▼                    ⌐1207
        ┌───────────────────────────────────────┐
        │      CALCULATE ROUTE COSTS Lr (p, d)   │
        └───────────────────────────────────────┘
                         │
                         ▼                    ⌐1208
        ┌───────────────────────────────────────┐
        │        CALCULATE SYNTHESIS COST S      │
        └───────────────────────────────────────┘
                         │
                         ▼                    ⌐1209
        ┌───────────────────────────────────────┐
        │            COMPUTE DISPARITY           │
        └───────────────────────────────────────┘
                         │
                         ▼
                    ┌─────────┐
                    │   END   │
                    └─────────┘
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Combination of Time-of-Flight depth and stereo using semiglobal optimization. **JAN FISCHER et al.** ROBOTICS AND AUTOMATION (ICRA), 2011 IEE INTERNATIONAL CONFERENCE ON. IEE, 09 May 2011, 3548-3553